# EUROPÄISCHE PATENTSCHRIFT

(11) **EP 2 730 745 B1**
(45) Veröffentlichungstag und Bekanntmachung des Hinweises auf die Patenterteilung: **30.08.2017**
(21) Anmeldenummer: 12191917.9
(22) Anmeldetag: 09.11.2012
(51) Int. Cl.: F01D 5/14, F01D 9/04

(54) **Schaufelanordnung für eine Turbomaschine**
Blade assembly for a turbo engine
Agencement d'aubes pour une turbomachine

(43) Veröffentlichungstag der Anmeldung: 14.05.2014
(73) Patentinhaber: MTU Aero Engines AG, 80995 München (DE)
(72) Erfinder: Mahle, Inga, 81669 München (DE); Schlemmer, Markus, 84048 Mainburg / Wambach (DE); Henrich, Eckart, 82110 Germering (DE)

(56) Entgegenhaltungen:
- EP-A1- 2 505 780
- FR-A1- 2 944 049
- US-A1- 2008 135 530
- US-A1- 2010 080 708

## Beschreibung

Die vorliegende Erfindung betrifft eine Schaufelanordnung für eine Turbomaschine, insbesondere eine Gasturbine, eine Gasturbine, insbesondere Flugtriebwerk, mit einer Verdichter- und/oder Turbinenstufe mit einer solchen Leit- und/oder Laufschaufelanordnung sowie ein Verfahren zur Herstellung einer solchen Schaufelanordnung. Beispielsweise aus der WO 2010/054632 A2 ist eine Schaufelanordnung mit Schaufelclustern mit einer Seitenwand und mehreren mit dieser stoffschlüssig verbundenen Schaufeln bekannt. Die Druckschrift US2008/0135530 offenbart eine Laufschaufel mit einem konturierten Innendeckband, wobei jeder Schaufelfuß nur ein einziges Schaufelblatt aufweist. Aufgabe der vorliegenden Erfindung ist es, eine verbesserte Turbomaschine mit Schaufelclustern zur Verfügung zu stellen.

Diese Aufgabe wird durch eine Schaufelanordnung mit den Merkmalen des Anspruchs 1 gelöst. Anspruch 7 stellt eine Gasturbine mit einer solchen Schaufelanordnung unter Schutz, Anspruch 8 ein Verfahren zur Herstellung einer solchen Schaufelanordnung. Die Unteransprüche betreffen vorteilhafte Weiterbildungen.

Eine Schaufelanordnung nach einem Aspekt der vorliegenden Erfindung weist zwei oder mehr Schaufelcluster auf, die in einer Umfangsrichtung nebeneinander angeordnet sind, um ein Strömungsgitter zu definieren. Bei den Schaufeln kann es sich insbesondere um Leit- oder Laufschaufeln handeln, in einer Weiterbildung um Leit-oder Laufschaufeln einer Gasturbine, insbesondere einer Verdichter- oder Turbinenstufe, vorzugsweise einer Niederdruckturbinenstufe. Die Schaufelcluster können radial innen und/oder außen an einem Gehäuse oder Rotor auswechselbar oder dauerhaft befestigt sein, insbesondere form- und/oder reibschlüssig, vorzugsweise mittels Schwalbenschwanzverbindung oder stoffschlüssig, vorzugsweise durch Schweißen oder Kleben.

Zwei oder mehr, vorzugsweise alle Schaufelcluster eines Strömungsgitters, weisen jeweils eine Seitenwand und eine Schaufelanordnung mit zwei, drei, vier, fünf, sechs oder mehr in Umfangsrichtung nebeneinander angeordneten Schaufeln auf, die mit der Seitenwand stoffschlüssig verbunden sind. Die Seitenwand kann insbesondere eine radial innere und/oder äußere Seitenwand aufweisen, insbesondere sein, die einen Arbeitsfluidströmungskanal definiert. Die Seitenwand kann insbesondere eine dem Arbeitsfluidströmungskanal zugewandte Oberfläche einer Schaufelplattform bzw. eines Schaufelfusses und/oder Schaufeldeckbandes aufweisen, insbesondere sein.

Schaufeln können separat hergestellt und anschließend mit der Seitenwand stoffschlüssig verbunden worden sein, insbesondere durch Schweißen, Löten oder Kleben. Gleichermaßen können Schaufeln integral mit der Seitenwand hergestellt, insbesondere urgeformt, worden und so ebenfalls stoffschlüssig mit diesen verbunden sein.

Von einer Druckseite einer ersten Schaufel bis zu einer Saugseite einer in Umfangsrichtung benachbarten zweiten Schaufel erstreckt sich ein erster Seitenwandabschnitt. Von einer Druckseite dieser zweiten Schaufel bis zu einer Saugseite einer in Umfangsrichtung benachbarten weiteren, der ersten Schaufel gegenüberliegenden bzw. in Umfangsrichtung übernächsten dritten Schaufel erstreckt sich ein zweiter Seitenwandabschnitt. In einer Ausführung erstreckt sich ein dritter Seitenwandabschnitt von einer Druckseite dieser dritten Schaufel bis zu einer Saugseite einer in Umfangsrichtung benachbarten weiteren, der zweiten Schaufel gegenüberliegenden vierten Schaufel. In einer Ausführung erstreckt sich ein n-ter Seitenwandabschnitt von einer Druckseite einer n-ten Schaufel bis zu einer Saugseite einer in Umfangsrichtung benachbarten weiteren, der n-ten Schaufel gegenüberliegenden (n+1)-ten Schaufel, wobei n in einer Ausführung n = 1,2,3,4,5,6,7,8,9,10 oder 11 sein kann.

Herkömmlicherweise weisen solche Schaufelabschnitte alle dieselbe Konturierung auf, so dass die Seitenwandkonturierung periodisch mit einer Schaufelteilung ist, die insbesondere in einem Querschnitt, der auf einer Drehachse der Turbomaschine senkrecht steht, durch den Abstand in Umfangsrichtung benachbarter Schaufeln definiert sein kann.

Nach einem Aspekt der vorliegenden Erfindung wird vorgeschlagen, dass der erste und der zweite Seitenwandabschnitt eine unterschiedliche Konturierung aufweisen. In einer Weiterbildung können der dritte Seitenwandabschnitt und der erste Seitenwandabschnitt dieselbe oder eine unterschiedliche Konturierung aufweisen. Zusätzlich oder alternativ können der dritte Seitenwandabschnitt und der zweite Seitenwandabschnitt dieselbe oder eine unterschiedliche Konturierung aufweisen. In einer Ausführung mit (n+1) Schaufeln pro Schaufelcluster, wobei n in einer Ausführung höchstens 11 und/oder wenigstens 1 beträgt, weisen wenigstens zwei und insbesondere alle n Seitenwandabschnitte unterschiedliche Konturierungen auf.

Nach diesem Aspekt wird somit eine Seitenwandkonturierung vorgeschlagen, die nicht einfach bzw. aperiodisch mit der Schaufelteilung ist. Hierdurch kann die Seitenwand eines Schaufelclusters abschnittsweise individuell optimiert werden. Auf diese Weise können vorteilhaft unterschiedliche strukturmechanische Randbedingungen wie beispielsweise einer Plattformbiegung, unterschiedliche konstruktive Randbedingungen wie beispielsweise ein Abstand in Umfangsrichtung zu einem Rand des Schaufelclusters bzw. zu einem benachbarten Schaufelcluster, und/oder unterschiedliche strömungsmechanische Randbedingungen wie beispielsweise eine Spaltströmung zwischen benachbarten Schaufelclustern bei der Gestaltung der Seitenwand berücksichtigt werden.

Beispielsweise kann in einer Ausführung ein Fillet einer Randschaufel eines Schaufelclusters in Umfangsrichtung kürzer ausgebildet sein, so dass es sich nicht bis zum Rand des Schaufelclusters erstreckt. Fillets von clusterinneren Schaufeln können sich hingegen in Umfangsrichtung weiter erstrecken. Bei herkömmlichen Schaufelanordnungen mit einer mit der Schaufelteilung periodischen Steitenwandkonturierung hingegen sind die Fillets alle gleich. Um ein Abschneiden der Fillets von Randschaufeln am Rand des Schaufelclusters zu vermeiden, müssen dort entsprechend auch Fillets von clusterinneren Schaufeln verkürzt werden. Gleichermaßen kann ein Plattformrand aufgedickt bzw. radial hochgezogen werden, insbesondere, um seitliche Dichtungsschlitze einzubringen.

Ein Seitenwandabschnitt kann in einer Ausführung einen ersten Übergangsbereich zu der Druckseite, einen zweiten Übergangsbereich zu der Saugseite und einen Zwischenbereich zwischen dem ersten und zweiten Übergangsbereich aufweisen. Ein oder beide Übergangsbereiche können in einer Weiterbildung gekehlt sein bzw. in Umfangsrichtung eine zum Arbeitsfluidströmungskanal konkave Krümmung aufweisen. Entsprechend kann sich in einer Ausführung ein Übergangsbereich zwischen einem zur Umfangsrichtung tangentialen Zwischenbereich bzw. Zwischenbereichrand und einem, wenigstens im Wesentlichen radialen Schaufel-, insbesondere Schaufelblattbereich erstrecken. Ein erster Übergangsbereich eines Seitenwandabschnitts und ein zweiter Übergangsbereich eines benachbarten Seitenwandabschnitts, d.h. die Übergangsbereiche zur Druck- und Saugseite derselben Schaufel, können miteinander verbunden sein und sich ringartig um diese Schaufel erstrecken und so ein sogenanntes Fillet bilden. Ein Fillet bzw. ein Übergangsbereich kann insbesondere durch eine lokale Wandstärkenvergrößerung gegenüber einer Schaufel(blatt)wandstärke gekennzeichnet sein.

In einer Ausführung können die ersten Übergangsbereiche des ersten und zweiten Seitenwandabschnitts eine unterschiedliche Konturierung aufweisen. Zusätzlich oder alternativ können die zweiten Übergangsbereiche des ersten und zweiten Seitenwandabschnitts eine unterschiedliche Konturierung aufweisen. Insbesondere können benachbarte Fillets druck- und/oder saugseitig unterschiedliche Konturierungen aufweisen. Wie vorstehend ausgeführt, kann beispielsweise ein Randfillet in Umfangsrichtung kürzer ausgebildet sein als ein clusterinneres.

Zusätzlich oder alternativ können die Zwischenbereiche des ersten und zweiten Seitenwandabschnitts eine unterschiedliche Konturierung aufweisen. Beispielsweise kann einer von beiden Seitenwandabschnitten eine oder mehrere radiale Vertiefungen und/oder Aufdickungen aufweisen, wobei der andere der beiden Seitenwandabschnitte an der entsprechenden Stelle keine oder eine größere oder geringere radiale Vertiefung bzw. Aufdickung aufweist.

Wenn in einer Weiterbildung der dritte Seitenwandabschnitt und der erste und/oder zweite Seitenwandabschnitt eine unterschiedliche Konturierung aufweisen, können entsprechend erste und/oder zweite Übergangsbereiche und/oder Zwischenbereiche des dritten und des ersten und/oder zweiten Seitenwandabschnitts eine unterschiedliche Konturierung aufweisen. Es kann also die Seitenwandkonturierung auch nicht bzw. aperiodisch mit der doppelten, in einer Weiterbildung mit einem ganzzahligen Vielfachen der Schaufelteilung sein, wobei dieses Vielfache kleiner als die Schaufelzahl eines Clusters ist.

In einer Ausführung kann die Seitenwandkonturierung (einfach) periodisch mit der Clusterteilung sein bzw. die Seitenwände von zwei oder mehr in Umfangsrichtung benachbarten Schaufelclustern, insbesondere aller Schaufelcluster des Gitters, eine, wenigstens im Wesentlichen, gleiche Konturierung aufweisen. In einer Ausführung weisen die beiden stirnseitigen Ränder bzw. Kanten der Seitenwand eines Schaufelclusters, die einander in Umfangsrichtung gegenüberliegen, wenigstens im Wesentlichen, die gleiche Konturierung auf, so dass sie, wenigstens im Wesentlichen, glatt ineinander übergehen. Gleichermaßen kann die Konturierung auch nur periodisch mit der doppelten, in einer Weiterbildung mit einem ganzzahligen Vielfachen der Clusterteilung sein. Hierzu können zwei Schaufelcluster, wenigstens im Wesentlichen, die gleiche Konturierung aufweisen, wobei ein oder mehr zwischen diesen angeordnete Schaufelcluster eine hiervon abweichende Konturierung aufweisen. Weisen beispielsweise benachbarte Schaufelcluster abwechselnde Seitenwandkonturierungen auf, ist die Seitenwandkonturierung insgesamt doppeltperiodisch mit der Clusterteilung.

Die unterschiedliche Seitenwandkonturierung ist innerhalb eines Schaufelclusters ausgebildet. Entsprechend ist ein erster Seitenwandabschnitt zwischen einer ersten und einer zweiten Schaufel und ein zweiter Seitenwandabschnitt mit hiervon abweichender Konturierung zwischen dieser zweiten und einer dritten Schaufel ausgebildet wobei diese erste, zweite und dritte Schaufel mit der Seitenwand desselben Schaufelclusters stoffschlüssig verbunden sind. In einer Weiterbildung kann auch eine vierte Schaufel mit der Seitenwand desselben Schaufelclusters stoffschlüssig verbunden sein, wobei der dritte Seitenwandabschnitt zwischen der dritten und vierten Schaufel eine von dem ersten und/oder dem zweiten Seitenwandabschnitt abweichende Konturierung aufweisen kann.

In dieser Ausführung ist die Seitenwandkonturierung entsprechend einfach periodisch mit der Clusterteilung oder periodisch mit einem Vielfachen dieser und zugleich nicht einfach bzw. aperiodisch mit der Schaufelteilung.

Zusätzlich oder alternativ kann einer von einem ersten und benachbarten zweiten Seitenwandabschnitt mit voneinander abweichender Konturierung auch zwischen zwei Schaufelclustern ausgebildet sein, d.h. eine erste, zweite oder dritte Schaufel eine Randschaufel eines Clusters sein. In einer Weiterbildung kann einer von einem ersten, benachbarten zweiten und benachbarten dritten Seitenwandabschnitt mit voneinander abweichender Konturierung auch zwischen zwei Schaufelclustern ausgebildet sein, d.h. eine erste, zweite, dritte oder vierte Schaufel eine Randschaufel eines Clusters sein.

Eine abweichende Konturierung im Sinne der vorliegenden Erfindung kann insbesondere in einem oder mehreren Querschnitten senkrecht zur Drehachse der Turbomaschine und/oder in einem oder mehreren Meridianschnitten vorliegen. In einer Ausführung kann die Kontur eines zweiten Seitenwandabschnitts an wenigstens einer Umfangsposition in radialer Richtung um wenigstens 1%, insbesondere wenigstens 2%, vorzugsweise wenigstens 2,5% einer Schaufelhöhe der Schaufelanordnung und/oder um wenigstens 0,1 mm insbesondere wenigstens 1 mm, vorzugsweise wenigstens 2 mm von der Kontur eines ersten und/oder dritten Seitenwandabschnitts an einer in Umfangsrichtung um eine Schaufelteilung versetzten Position abweichen. In einer Weiterbildung weicht die Kontur eines zweiten Seitenwandabschnitts zwischen einer ersten und einer zweiten Umfangsposition, die demgegenüber insbesondere um wenigstens 10%, vorzugsweise wenigstens 25% der Länge des Seitenwandabschnitts in Umfangsrichtung versetzt ist, um wenigstens 1%, insbesondere wenigstens 2%, vorzugsweise wenigstens 2,5% einer Schaufelhöhe der Schaufelanordnung und/oder um wenigstens 0,1 mm insbesondere wenigstens 1 mm, vorzugsweise wenigstens 2 mm von der Kontur eines ersten und/oder dritten Seitenwandabschnitts zwischen einer in Umfangsrichtung um eine Schaufelteilung gegenüber der ersten Umfangsposition versetzten Position und einer in Umfangsrichtung um eine Schaufelteilung gegenüber der zweiten Umfangsposition versetzten Position ab. Insbesondere kann also die Kontur eines Seitenwandabschnitts in einem Querschnitt auf wenigstens 10%, insbesondere wenigstens 25% der Schaufelteilung von dem entsprechenden, um eine Schaufelteilung versetzten Bereich des benachbarten Seitenwandabschnitts in radialer Richtung um wenigstens 1%, insbesondere wenigstens 2%, vorzugsweise wenigstens 2,5% einer Schaufelhöhe der Schaufelanordnung und/oder um wenigstens 0,1 mm insbesondere wenigstens 1 mm, vorzugsweise wenigstens 2 mm abweichen.

Weitere Merkmale und Vorteile ergeben sich aus den Unteransprüchen und Ausführungsbeispielen. Hierzu zeigt, teilweise schematisiert,
- Fig. 1:: eine Draufsicht in radialer Richtung nach innen auf ein geschnittenes Schaufelcluster einer Laufschaufelanordnung eines Gasturbinenflugtriebwerks nach einer Ausführung der vorliegenden Erfindung;
- Fig. 2:: eine Draufsicht in radialer Richtung nach außen auf das geschnittene Schaufelcluster der Fig. 1; und
- Fig. 3:: eine perspektivische Ansicht des geschnittenen Schaufelclusters der Fig. 1.

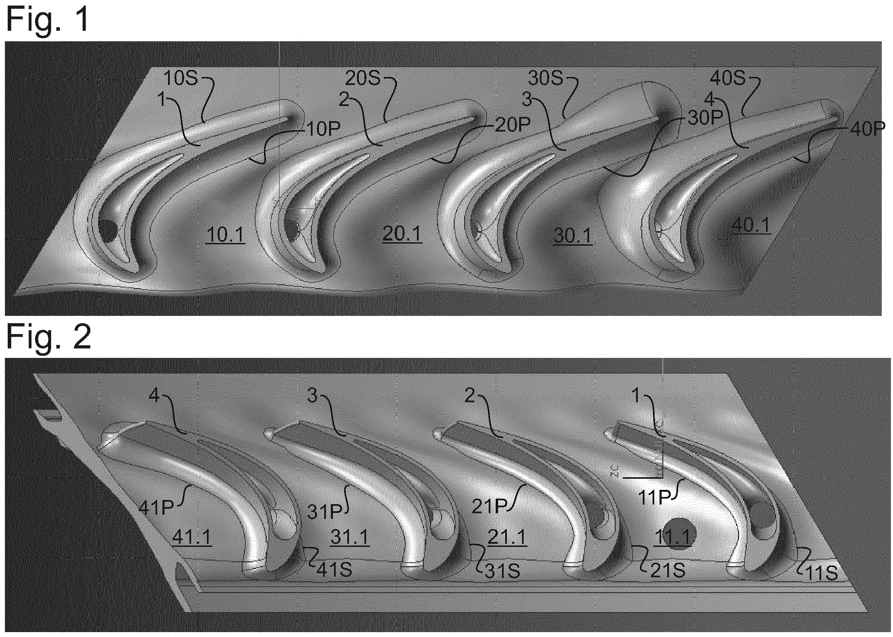

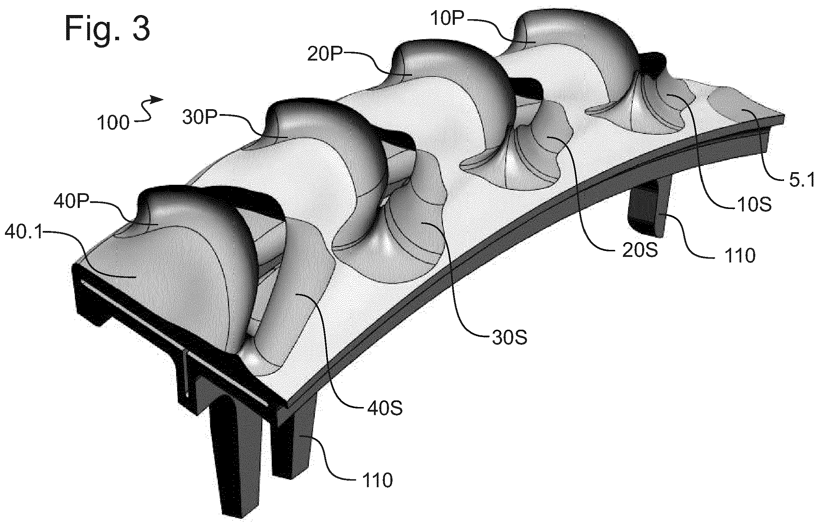

Fig. 1 zeigt eine Draufsicht in radialer Richtung nach innen auf ein geschnittenes Schaufelcluster 100 (vgl. Fig. 3) einer Laufschaufelanordnung eines Gasturbinenflugtriebwerks nach einer Ausführung der vorliegenden Erfindung, Fig. 3 eine entsprechende perspektivische Darstellung. Fig. 2 zeigt eine Draufsicht in radialer Richtung nach außen auf das (an anderer radialer Stelle) geschnittene Schaufelcluster.

Das Schaufelcluster weist eine Schaufelanordnung mit vier in Umfangsrichtung (horizontal in Fig. 1, 2) nebeneinander angeordneten Schaufeln 1- 4 auf, die mit einer Seitenwand stoffschlüssig verbunden, insbesondere verschweißt oder urgeformt, sind. Die Seitenwand weist eine radial innere Seitenwand bzw. Plattformoberfläche zur Definition eines Arbeitsfluidströmungskanals auf, die in Fig. 1, 3 erkennbar ist, sowie eine radial äußere Seitenwand bzw. Deckbandinnenfläche zur Definition eines Arbeitsfluidströmungskanals auf, die in Fig. 2 erkennbar ist.

Auf der dem Arbeitsfluidströmungskanal abgewandten Seite der Plattform sind Führungen 110 (vgl. Fig. 3) für die SIMS angeordnet. In Umfangsrichtung neben dem Schaufelcluster 100 sind an dieses angrenzend gleich ausgebildete weitere Schaufelcluster angeordnet (nicht dargestellt).

Zwischen einer Druck- und einer Saugseite der Schaufeln 1 - 4 erstrecken sich Seitenwandabschnitte. Jeder dieser Seitenwandabschnitte weist jeweils einen gekehlten ersten Übergangsbereich 10P, 20P, 30P bzw. 40P (Plattform bzw. radial innen, vgl. Fig. 1, 3) bzw. 11P, 21P, 31P bzw. 41P (Deckband bzw. radial außen, vgl. Fig. 2) zu der Druckseite, einen gekehlten zweiten Übergangsbereich 10S, 20S, 30S bzw. 40S (Plattform bzw. radial innen, vgl. Fig. 1, 3) bzw. 11S, 21S, 31S bzw. 41S (Deckband bzw. radial außen, vgl. Fig. 2) zu der Saugseite, und einen Zwischenbereich 10.1, 20.1, 30.1 bzw. 40.1 (Plattform bzw. radial innen, vgl. Fig. 1) bzw. 11.1, 21.1, 31.1 bzw. 41.1 (Deckband bzw. radial außen, vgl. Fig. 2) zwischen diesem ersten und zweiten Übergangsbereich auf. In Fig. 3 ist mit 5.1 zudem ein Zwischenbereich eines radial inneren Seitenwandabschnitts zwischen der Schaufel 1 bzw. deren druckseitigem Übergangsbereich 10P und einem saugseitigen Übergangsbereich einer benachbarten Randschaufel eines benachbarten Schaufelclusters (nicht dargestellt) bezeichnet. Die druck- und saugseitigen Übergangsbereiche (10P, 10S), (20P, 20S), (30P, 30S), (40P, 40S), (11P, 11S), (21P, 21S), (31P, 31S) bzw. (41P, 41S) einer Schaufel 1, 2, 3 bzw. 4 bilden jeweils ein Fillet dieser Schaufel.

Die einzelnen Fillets weisen voneinander abweichende bzw. unterschiedliche Konturierungen auf, die insbesondere in einem Meridianschnitt als unterschiedliche radiale Erstreckungen bzw. als radiale Abweichungen an einander entsprechenden, um eine Schaufelteilung versetzten Umfangspositionen ausgeprägt sind. Besonders deutlich wird dies etwa im Vergleich des saugseitigen Übergangsbereichs 30P mit benachbarten saugseitigen Übergangsbereichen 20P, 40P: der clusterinnere Übergangsbereich 30P erstreckt sich weiter in Umfangsrichtung bzw. weicht an derselben Umfangsposition in radialer Richtung ab, verglichen insbesondere mit dem Randübergangsbereich 40P. Auf diese Weise kann das Fillet (30P, 30S) verstärkt werden, um beispielsweise strukturmechanisch bedingten erhöhten Belastungen Rechnung zu tragen, ohne dass das Randfillet (40P, 40S) am Rand des Clusters abgeschnitten werden müsste.

Zusätzlich weisen auch die Zwischenbereiche eine unterschiedliche Konturierung auf. Besonders deutlich wird dies etwa im Vergleich des Zwischenbereichs 40.1 mit benachbarten Zwischenbereichen 5.1 (vgl. Fig. 3), 30.1 (vgl. Fig. 1). Man erkennt außerdem, dass die beiden stirnseitigen Ränder bzw. Kanten der Seitenwand des Schaufelclusters 100, die einander in Umfangsrichtung gegenüberliegen (links, rechts in Fig. 1 - 3) im Wesentlichen die gleiche Konturierung aufweisen, so dass sie, wenigstens im Wesentlichen, glatt in die Seitenwand des benachbarten Schaufelclusters übergehen.

Bezeichnet 1 eine erste, 2 eine zweite, 3 eine dritte und 4 eine vierte Schaufel im Sinne der vorliegenden Erfindung, so weisen ein erster Seitenwandabschnitt (10P, 10.1, 20S), ein zweiter Seitenwandabschnitt (20P, 20.1, 30S) und ein dritter Seitenwandabschnitt (30P, 30.1, 40S) unterschiedliche Konturierungen auf (vgl. Fig. 1, 3). Gleichermaßen weisen ein erster Seitenwandabschnitt (11P, 11.1, 21S), ein zweiter Seitenwandabschnitt (21P, 21.1, 31S) und ein dritter Seitenwandabschnitt (31P, 31.1, 41S) unterschiedliche Konturierungen auf. Die Seitenwandkonturierung ist also nicht einfach bzw. aperiodisch mit der Schaufelteilung.

Die Seitenwandabschnitte der benachbarten Schaufelcluster insgesamt sind jedoch aufgrund der identischen Ausbildung der Schaufelcluster gleich konturiert, so dass die Seitenwandkonturierung einfach periodisch mit der Clusterteilung ist.

### Bezugszeichenliste

- 1, 2, 3, 4: (erste, zweite, dritte, vierte) Schaufel
- 10P, 20P, 30P, 40P: radial innerer druckseitiger Übergangsbereich
- 10S, 20S, 30S, 40S: radial innerer saugseitiger Übergangsbereich
- 11P, 21P, 31P, 41P: radial äußerer druckseitiger Übergangsbereich
- 11S, 21S, 31S, 41S: radial äußerer saugseitiger Übergangsbereich
- 5.1, 10.1, 20.1, 30.1, 40.1: radial innerer Zwischenbereich
- 11.1, 21.1, 31.1, 41.1: radial äußerer Zwischenbereich
- 100: Schaufelcluster
- 110: Schaufelbefestigung

## Patentansprüche

1. Schaufelanordnung für eine Turbomaschine, insbesondere eine Gasturbine, mit wenigstens zwei in einer Umfangsrichtung nebeneinander angeordneten Schaufelclustern (100) mit einer Seitenwand (5.1, 10S, 10P, 10.1, 20S, 20P, 20.1, 30S, 30P, 30.1, 40S, 40P, 40.1, 11S, 11P, 11.1, 21S, 21P, 21.1, 31S, 31P, 31.1, 41S, 41P, 41.1) und einer Schaufelanordnung mit wenigstens zwei in Umfangsrichtung nebeneinander angeordneten Schaufeln (1, 2, 3, 4), die mit der Seitenwand stoffschlüssig verbunden sind, wobei ein erster Seitenwandabschnitt (10P, 10.1, 20S, 11P, 11.1, 21S) zwischen einer Druckseite einer ersten Schaufel (1) und einer Saugseite einer in Umfangsrichtung benachbarten zweiten Schaufel (2) und ein zweiter Seitenwandabschnitt (20P, 20.1, 30S, 21P, 21.1, 31S) zwischen einer Druckseite dieser zweiten Schaufel und einer Saugseite einer in Umfangsrichtung benachbarten dritten Schaufel (3) eine unterschiedliche Konturierung aufweisen, **dadurch gekennzeichnet, dass** die zweite Schaufel und die ihr benachbarte erste und/oder dritte Schaufel mit der Seitenwand eines Schaufelclusters stoffschlüssig verbunden sind.

2. Schaufelanordnung nach Anspruch 1, **dadurch gekennzeichnet, dass** ein dritter Seitenwandabschnitt (30P, 30.1, 40S, 31P, 31.1, 41S) zwischen einer Druckseite dieser dritten Schaufel und einer Saugseite einer in Umfangsrichtung benachbarten vierten Schaufel (4) und der erste und/oder zweite Seitenwandabschnitt eine unterschiedliche Konturierung aufweisen.

3. Schaufelanordnung nach einem der vorhergehenden Ansprüche, **dadurch gekennzeichnet, dass** wenigstens zwei Seitenwandabschnitte je einen, insbesondere gekehlten, ersten Übergangsbereich (10P, 20P, 30P, 40P, 11P, 21P, 31P, 41P) zu der Druckseite, einen, insbesondere gekehlten, zweiten Übergangsbereich (10S, 20S, 30S, 40S, 11S, 21S, 31S, 41S) zu der Saugseite, und einen Zwischenbereich (10.1, 20.1, 30.1, 40.1, 11.1, 21.1, 31.1, 41.1) zwischen dem ersten und zweiten Übergangsbereich aufweisen, wobei der erste und/oder zweite Übergangsbereich und/oder der Zwischenbereich der beiden Seitenwandabschnitte eine unterschiedliche Konturierung aufweisen.

4. Schaufelanordnung nach einem der vorhergehenden Ansprüche, **dadurch gekennzeichnet, dass** die Seitenwände von wenigstens zwei in Umfangsrichtung benachbarten Schaufelcluster eine, wenigstens im Wesentlichen, gleiche Konturierung aufweisen.

5. Schaufelanordnung nach einem der vorhergehenden Ansprüche, **dadurch gekennzeichnet, dass** die Seitenwände radial innere und/oder äußere Seitenwände zur Definition eines Arbeitsfluidströmungskanals aufweisen.

6. Schaufelanordnung nach einem der vorhergehenden Ansprüche, **dadurch gekennzeichnet, dass** eine Konturierung eines Seitenwandabschnitts, insbesondere eines Zwischen- und/oder eines ersten und/oder zweiten Übergangsbereichs von einer Konturierung eines weiteren, insbesondere benachbarten Seitenwandabschnitts, insbesondere eines Zwischen- und/oder eines ersten und/oder zweiten Übergangsbereichs, wenigstens an einer Umfangsposition, insbesondere in einem Querschnitt, in radialer Richtung um wenigstens 1%, insbesondere wenigstens 2%, vorzugsweise wenigstens 2,5% einer Schaufelhöhe der Schaufelanordnung und/oder um wenigstens 0,1 mm insbesondere wenigstens 1 mm, vorzugsweise wenigstens 2 mm abweicht.

7. Gasturbine, insbesondere Flugtriebwerk, mit wenigstens einer Verdichter- und/oder Turbinenstufe mit einer Leit- und/oder Laufschaufelanordnung nach einem der vorhergehenden Ansprüche.

8. Verfahren zum Herstellen einer Schaufelanordnung nach Anspruch 1 oder einem der darauf rückgezogenen Ansprüche.

## Claims

1. A blade assembly for a turbomachine, in particular a gas turbine, comprising at least two blade clusters (100) arranged adjacent to one another in a circumferential direction with a side wall (5.1, 10S, 10P, 10.1, 20S, 20P, 20.1, 30S, 30P, 30.1, 40S, 40P, 40.1, 11S, 11P, 11.1, 21S, 21P, 21.1, 31S, 31P, 31.1, 41S, 41P, 41.1) and a blade assembly with at least two blades (1, 2, 3, 4) which are arranged adjacent to one another in the circumferential direction and are connected to the side wall, wherein a first side wall portion (10P, 10.1, 20S, 11P, 11.1, 21S) between a pressure side of a first blade (1) and a suction side of a second blade (2) adjacent thereto in a circumferential direction has different contours from those of a second side wall portion (20P, 20.1, 30S, 21P, 21.1, 31S) between a pressure side of this second blade and a suction side of a third blade (3) adjacent thereto in a circumferential direction, **characterized in that** the second blade and the first and/or third blade adjacent thereto are connected by positive engagement to the side wall of a blade cluster.

2. The blade assembly according to claim 1, **characterized in that** a third side wall portion (30P, 30.1, 40S, 31P, 31.1, 41S) between a pressure side of this third blade (1) and a suction side of a fourth blade (4) adjacent thereto in a circumferential direction have different contours from those of the first and/or second side wall portion.

3. The blade assembly according to one of the preceding claims, **characterized In that** at least two side wall portions each have an, in particular fluted, first transition region (10P, 20P, 30P, 40P, 11P, 21P, 31P, 41P) to the pressure side, an, in particular fluted, second transition region (10S, 20S, 30S, 40S, 11S, 21S, 31S, 41S) to the suction side, and an intermediate region (10.1, 20.1, 30.1, 40.1, 11,1, 21.1, 31.1, 41.1) between the first and second transition region, herein the first and/or second transition region and/or the intermediate region of the two side wall portions have different contours.

4. The blade assembly according to one of the preceding claims, **characterized in that** the side walls of at least two blade clusters which are adjacent in a circumferential direction have at least substantially the same contours.

5. The blade assembly according to one of the preceding claims, **characterized in that** the side walls have radially inner and/or outer side walls for definition of a working fluid flow channel.

6. The blade assembly according to one of the preceding claims, **characterized in that** a contour of a side wall portion, in particular of an intermediate and/or a first and/or second transition region differs from a contour of a further, in particular adjacent, side wall portion, in particular an intermediate and/or a first and/or second transition region, at least at a circumferential position, in particular in a cross section, in a radial direction by at least 1%, in particular at least 2%, preferably at least 2.5% of a blade height the blade assembly and/or by at least 0.1 mm, in particular at least 1 mm, preferably at least 2 mm.

7. A gas turbine, in particular an aircraft engine, comprising at least one compressor stage and/or turbine stage with a guide blade and/or moving blade assembly according to one of the preceding claims.

8. A method for producing a blade assembly according to claim 1 or one of the claims dependent thereon.

## Revendications

1. Agencement d'aubes pour une turbomachine, en particulier une turbine à gaz, comprenant au moins deux groupes d'aubes (100) agencés l'un à côté de l'autre dans une direction circonférentielle avec une paroi latérale (5.1, 10S, 10P, 10.1, 20S, 20P, 20.1, 30S, 30P, 30.1, 40S, 40P, 40.1, 11S, 11P, 11.1, 21S, 21P, 21.1, 31S, 31P, 31,1, 41S, 41P, 41.1) et un agencement d'aubes avec au moins deux aubes (1, 2, 3, 4) agencées l'une à côté de l'autre dans la direction circonférentielle, qui sont reliées à la paroi latérale par venue de matière, dans lequel une première section de paroi latérale (10P, 10.1, 20S, 11P, 11.1, 21S) entre un côté de refoulement d'une première aube (1) et un côté d'aspiration d'une deuxième aube (2) adjacente dans la direction circonférentielle et une deuxième section de paroi latérale (20P, 20.1, 305, 21P, 21.1, 31S) entre un côté de refoulement de cette deuxième aube et un côté d'aspiration d'une troisième aube (3) adjacente dans la direction circonférentielle présentent un contour différent, **caractérisé en ce que** la deuxième aube et la première et/ou la troisième aube qui lui sont adjacentes sont reliées la paroi latérale d'un groupe d'aubes par venue de matière.

2. Agencement d'aubes selon la revendication 1, **caractérisé en ce qu'**une troisième section de paroi latérale (30P, 30.1, 40S, 31P, 31.1, 41S) entre un côté de refoulement de cette troisième aube et un côté d'aspiration d'une quatrième aube (4) adjacente dans la direction circonférentielle et la première et/ou la deuxième section de paroi latérale présentent un contour différent.

3. Agencement d'aubes selon l'une quelconque des revendications précédentes, **caractérisé en ce qu'**au moins deux sections de paroi latérale présentent respectivement une première zone de transition en particulier rainurée (10P, 20P, 30P, 11P, 21P, 31P, 41P) avec le côté de refoulement, une deuxième zone de transition en particulier rainurée (10S, 20S, 30S, 40S, 11S, 21S, 315, 415) avec le côté d'aspiration et une zone intermédiaire (10.1, 20.1, 30.1, 40.1, 11,1, 21,1, 31.1, 41,1) entre la première et la deuxième zone de transition, dans lequel la première et/ou la deuxième zone de transition et/ou la zone intermédiaire des deux sections de paroi latérale présentent un contour différent.

4. Agencement d'aubes selon l'une quelconque des revendications précédentes, **caractérisé en ce que** les parois latérales d'au moins deux groupes d'aubes adjacents dans la direction circonférentielle présentent un contour au moins sensiblement égal.

5. Agencement d'aubes selon l'une quelconque des revendications précédentes, **caractérisé en ce que** les parois latérales présentent des parois latérales radialement interne et/ou externe pour définir un canal d'écoulement de fluide de travail.

6. Agencement d'aubes selon l'une quelconque des revendications précédentes, **caractérisé en ce qu'**un contour d'une section de paroi latérale, en particulier d'une zone intermédiaire et/ou d'une première et/ou d'une deuxième zone de transition s'écartent d'un contour d'une autre section de paroi latérale en particulier adjacente, notamment d'une zone intermédiaire et/ou d'une première et/ou d'une deuxième zone de transition, au moins dans une position circonférentielle, en particulier en section transversale, dans la direction radiale d'au moins 1 %, en particulier d'au moins 2 %, de préférence d'au moins 2,5 % d'une hauteur d'aube de l'agencement d'aubes et/ou d'au moins 0,1 mm, en particulier d'au moins 1 mm, de préférence d'au moins 2 mm.

7. Turbine à gaz, en particulier groupe motopropulseur, comprenant au moins un étage de compresseur et/ou un étage de turbine avec un agencement d'aubes directrices et/ou de pales selon l'une quelconque des revendications précédentes.

8. Procédé de fabrication d'un agencement d'aubes selon la revendication 1 ou l'une des revendications qui s'y réfèrent.
